# DEMANDE DE BREVET EUROPEEN

(11) **EP 4 144 210 A1**
(43) Date de publication de la demande: **08.03.2023**
(21) Numéro de dépôt: 21195296.5
(22) Date de dépôt: 07.09.2021
(51) Int. Cl.: A01K 47/00, G01G 17/08, G01G 19/52, G01G 23/37

(54) **RUCHER CONNECTE COMPORTANT UNE RUCHE MAÎTRE ET UNE PLURALITE DE RUCHES ESCLAVES**

(71) Demandeur: Miecolo, 33700 Merignac (FR)
(72) Inventeur: VALENTI, Quentin, 33700 Mérignac (FR)
(74) Mandataire: Aquinov

(57) **Abrégé**

L'invention concerne un rucher connecté comprenant une ruche dite maitre (11) et une pluralité de ruches dites esclaves (12), chacune des ruches maitre et esclaves comportant un capteur de poids (22) apte à acquérir des données relatives au poids de la ruche et un module de communication sans-fil (25, 35), la ruche maitre étant agencée pour récolter, aux moyens des modules de communication sans-fil, des données acquises par les capteurs de poids des ruches esclaves, et pour transmettre l'ensemble des données acquises par les capteurs de poids des ruches maitre et esclaves à un terminal distant (2), le module de communication sans-fil de chaque ruche esclave étant agencé pour transmettre au module de communication de la ruche maitre lesdites données acquises par le capteur de poids de cette ruche esclave au moyen d'une porteuse de fréquence inférieure à 1 GHz..

## Description

L'invention concerne le domaine de l'apiculture. Plus précisément, l'invention concerne un rucher connecté et un système de gestion d'un tel rucher connecté permettant de surveiller la production de miel.

Il est connu d'équiper une ruche d'un ensemble de capteurs permettant de surveiller l'activité des abeilles de cette ruche. Par exemple, une ruche peut être équipée d'une balance permettant de surveiller le poids de cette ruche afin de superviser la production de miel et les flux entrant et sortant des abeilles. Une ruche peut également être équipée de capteurs d'humidité, de température, permettant d'affiner cette supervision et d'augmenter le nombre d'indicateurs relatifs à la production de miel, à la santé, l'environnement et la vie des abeilles. Une ruche peut également être équipée d'un antivol, permettant de détecter un vol de ruche et, éventuellement de localiser et de suivre les déplacements de la ruche si elle est volée.

De façon connue, ces capteurs peuvent être reliés à un module de communication sans-fil, lequel peut alors transmettre les données acquises par ces capteurs à un terminal distant, comme un téléphone intelligent. L'apiculteur peut ainsi superviser l'activité de la ruche à distance.

Si cette solution de ruche connectée répond bien aux besoins des apiculteurs modernes, elle n'est cependant pas satisfaisante dans le cadre d'une production professionnelle. En effet, à l'échelle d'un rucher comportant une cinquantaine de ruches, l'équipement de chacune de ces ruches d'un ensemble de capteurs et d'un module de communication sans-fil apte à communiquer avec un terminal distant représente une infrastructure trop couteuse pour l'apiculteur. Une telle infrastructure requiert par ailleurs un système informatique complexe permettant à l'apiculteur de surveiller individuellement chacune des ruches au niveau d'une même interface, et requiert en outre de reconfigurer ce système à chaque modification du rucher, par exemple lors de l'ajout ou de la suppression d'une ruche.

Enfin, dans un tel rucher, chaque ruche doit être équipé d'un module de communication sans-fil apte à transmettre des données à un terminal distant. L'antenne de ce module de communication émet ainsi des ondes électromagnétiques qui perturbent la colonie d'abeilles du rucher, venant ainsi impacter négativement la production de miel, voire provoquant la disparition des abeilles.

La présente invention se place ainsi dans ce contexte et vise à proposer un rucher connecté permettant à un apiculteur de superviser sa production de miel, tout en palliant les différents inconvénients cités.

A ces fins, l'invention a pour objet un rucher connecté comprenant une ruche dite maitre et une pluralité de ruches dites esclaves, chacune des ruches maitre et esclaves comportant un capteur de poids apte à acquérir des données relatives au poids de la ruche et un module de communication sans-fil, la ruche maitre étant agencée pour récolter, aux moyens des modules de communication sans-fil, des données acquises par les capteurs de poids des ruches esclaves, et pour transmettre l'ensemble des données acquises par les capteurs de poids des ruches maitre et esclaves à un terminal distant, le module de communication sans-fil de chaque ruche esclave étant agencé pour transmettre au module de communication de la ruche maitre lesdites données acquises par le capteur de poids de cette ruche esclave au moyen d'une porteuse de fréquence inférieure à 1 GHz.

L'invention propose ainsi une architecture de rucher centralisée autour d'une seule et même ruche maitre, chargée de récolter les données acquises par les capteurs de poids des autres ruches esclaves et de transmettre ces données vers un terminal distant, à partir duquel l'apiculteur pourra superviser sa production de miel. Seul le module de communication est ainsi destiné à transmettre les données vers le terminal distant, de sorte que le coût de la communication entre le rucher et le terminal distant est réduit à la seule ruche maitre. Par ailleurs, la structure électronique des ruches esclaves peut alors être simplifiée, notamment de sorte à en réduire son coût. En particulier, le module de communication sans-fil de chaque ruche esclave peut être agencé pour mettre en œuvre des protocoles de communication courte distance et basse consommation, lesquels requièrent des antennes de moindre puissance. Enfin, il est alors possible d'employer des porteuses de fréquence inférieure à 1 GH. Il a été constaté que ces porteuses sont moins nocives pour les abeilles et sont moins susceptibles de provoquer un phénomène d'effondrement de la colonie.

Dans la présente invention, on entend par terminal distant un dispositif électronique équipé d'au moins un module de communication sans-fil apte à recevoir des données émises par le module de communication sans-fil de la ruche maitre et d'une mémoire informatique ainsi que de moyens de lecture et d'écriture dans cette mémoire. Le cas échéant, l'ensemble des données acquises par les capteurs de poids des ruches maitre et esclaves et transmis par le module de communication sans-fil de la ruche maitre sont ainsi stockés, à l'aide moyens de lecture et d'écriture, dans cette mémoire. De préférence, le terminal distant pourra être muni d'une interface et de moyens de traitement de données permettant à un apiculteur de visualiser tout ou partie desdites données acquises par les capteurs de poids ou des données dérivées, par les moyens de traitement, desdites données acquises par les capteurs de poids. Par exemple, le terminal distant pourra comporter un serveur de données et ladite interface et lesdits moyens de traitement pourront comporter un ou plusieurs programmes informatiques installés sur ledit serveur de données et permettant un accès distant audit serveur de données, par exemple depuis un téléphone intelligent ou une tablette tactile.

Avantageusement, le module de communication sans-fil de chaque ruche esclave est apte à émettre un ou plusieurs messages contenant lesdites données acquises par le capteur de poids de cette ruche à destination de la ruche maitre selon un protocole de communication donné, le message contenant en outre un identifiant de ladite ruche esclave associées auxdites données. Le cas échéant, ledit message pour être reçu par le module de communication sans-fil d'une autre ruche esclave, lequel pourra être agencé pour transmettre ledit message à destination de la ruche maitre. Chaque ruche esclave peut ainsi jouer le rôle d'un relai, permettant à la ruche maitre de collecter des données transmises par des ruches esclaves trop éloignées.

De préférence, le module de communication sans-fil de la ruche maitre est agencé pour transmettre l'ensemble des données acquises par les capteurs de poids des ruches maitre et esclaves au terminal distant au moyen d'une porteuse de fréquence inférieure à 1 GHz. On pourra par exemple prévoir que la ruche maitre comporte un premier sous-module de communication sans-fil apte à récolter des données acquises par les capteurs de poids des ruches esclaves et transmises par les modules de communication sans-fil de ces ruches esclaves et un deuxième sous-module de communication sans-fil, distinct du premier sous-module, agencé pour transmettre l'ensemble des données acquises par les capteurs de poids des ruches maitre et esclaves au terminal distant. Par exemple, les modules de communication sans-fil des ruches esclaves pourront émettre des messages à destination de la ruche maitre selon un même protocole de communication et le premier sous-module de communication sans-fil pourra être apte à extraire lesdites données desdits messages.

Avantageusement, le capteur de poids de chacune des ruche maitre et esclaves comporte au moins un, notamment quatre, capteurs de force ou de compression, sur lequel ou lesquels repose le corps ou une hausse de ladite ruche. Par exemple, chacune des ruche maitre et esclaves peut comporter une platine en forme de H, un capteur de force étant agencé à chaque extrémité de ladite platine, la platine supportant le corps de ladite ruche. Le cas échéant, la platine peut supporter un boîtier dans lequel est agencé le module de communication sans-fil de ladite ruche. Eventuellement, la platine peut être formée par impression en trois dimensions d'amidon de maïs ou en variante d'ABS (acronyme d'Acrylonitrile Butadiène Styrène) ou encore de PETG (acronyme de Polyester Glycosé).

Dans un mode de réalisation de l'invention, chacune des ruches maitre et esclaves comporte un capteur de température et un capteur d'humidité, la ruche maitre étant agencée pour récolter, aux moyens des modules de communication sans-fil, des données acquises par les capteurs de poids, de température et d'humidité des ruches esclaves, et pour transmettre l'ensemble des données acquises par les capteurs de poids, de température et d'humidité des ruches maitre et esclaves au terminal distant. Il est ainsi possible de multiplier, au niveau du terminal distant, les indicateurs de production et de santé du rucher, et éventuellement de déterminer des corrélations entre ces différents indicateurs.

Si on le souhaite, le capteur de température et le capteur d'humidité de chaque ruche esclave pourront être embarqué dans un même boîtier agencé dans la ruche, ledit boîtier embarquant un autre module de communication sans-fil apte à transmettre à la ruche maitre des données acquises par ces capteurs de température et d'humidité. Le cas échéant, pour chaque ruche esclaves, ces données sont transmises par cet autre module de communication sans-fil à la ruche maitre en étant associées au même identifiant de ruche associé aux données acquises par le capteur de poids de cette ruche esclave et transmises par le module de communication sans-fil de cette ruche esclave.

Avantageusement, chacune des ruches maitre et esclaves comporte un panneau photovoltaïque et une unité de stockage d'énergie électrique ; le panneau photovoltaïque de chaque ruche étant agencé pour charger ladite unité de stockage de ladite ruche; et ladite unité de stockagede ladite ruche étant agencée pour alimenter électriquement le capteur de poids et le module de communication sans-fil de ladite ruche. L'unité de stockage d'énergie électrique peut par exemple être une batterie électrique incorporant notamment un ou plusieurs accumulateurs ou piles, un supercondensateur. De préférence, chacune des ruches maitre et esclaves comporte un système de gestion de charge apte à contrôler la charge de l'unité de stockage et l'alimentation des différents composants de ladite ruche. Ce système, également nommé BMS (de l'anglais « Battery management System »), peut par exemple être agencé pour autoriser la charge de l'unité de stockage si le niveau de charge de l'unité de stockage est supérieur à un seuil donné et, le cas échéant, pour interdire l'alimentation directe des différents composants de ladite ruche par le panneau photovoltaïque, et pour autoriser l'alimentation directe des différents composants de ladite ruche par le panneau photovoltaïque si le niveau de charge de l'unité de stockage est inférieur audit seuil donné. De la sorte, chacune des ruches maitre et esclaves est autonome en énergie et évite des interventions répétées de l'apiculteur pour changer une pile ou recharger une batterie du ou des capteurs de cette ruche ou de son module de communication sans-fil.

Dans un mode de réalisation de l'invention, le module de communication sans-fil de chaque ruche esclave est agencé pour transmettre, de façon périodique, au module de communication sans-fil de la ruche maitre lesdites données acquises par le capteur de poids de cette ruche esclave, lesdites données étant transmises par tous les modules de communication sans-fil à un même instant d'émission. Le cas échéant, le module de communication sans-fil de la ruche maitre peut être agencé pour transmettre, à la réception de l'ensemble desdites données, lesdites données reçues et les données acquises par le capteur de poids de la ruche maitre au terminal distant. A titre d'exemple non limitatif, ladite période de transmission des données peut être de 30 minutes.

Avantageusement, le capteur de poids de chacune des ruches maitre et esclaves est apte à emprunter une configuration d'acquisition et une configuration inactive, chacune des ruches maitre et esclaves comportant une unité de contrôle agencée pour contrôler le capteur de poids de ladite ruche pour qu'il emprunte ladite configuration d'acquisition audit instant d'émission et pour qu'il emprunte ladite configuration inactive entre deux instants d'émission consécutifs.

Avantageusement toujours, le module de communication de chacune des ruches esclaves est apte à emprunter une configuration d'émission et une configuration inactive et le module de communication de la ruche maitre est apte à emprunter une configuration d'émission et réception et une configuration inactive, l'unité de contrôle de chaque ruche esclave étant agencée pour contrôler le module de communication de ladite ruche pour qu'il emprunte ladite configuration d'émission audit instant d'émission et pour qu'il emprunte ladite configuration inactive entre deux instants d'émission consécutifs; et l'unité de contrôle de la ruche maitre étant agencée pour contrôler le module de communication de ladite ruche pour qu'il emprunte ladite configuration d'émission et réception audit instant d'émission et pour qu'il emprunte ladite configuration inactive entre deux instants d'émission consécutifs. Selon ces caractéristiques, la consommation électrique des différents composants des ruches est ainsi réduite au minimum, sauf lors des mises-à-jour périodiques des poids des ruches.

On entend par configuration inactive d'un composant électronique une configuration dans lequel ce composant électronique ne présente peu ou pas de consommation électrique, les fonctionnalités de ce composant électronique étant alors inaccessible. Par exemple, l'ensemble des capteurs d'une ruche et le module de communication sans-fil de cette ruche peuvent former un même système électronique pouvant emprunter une configuration active et une configuration inactive, la configuration de ce système électronique étant contrôlée par l'unité de contrôle de ladite ruche.

Avantageusement, chacune des ruches maitre et esclaves comporte une horloge temps réel muni d'un contrôleur. Le cas échéant, le module de communication sans-fil de la ruche maitre est apte à recevoir de façon périodique un signal de mise à jour de l'horloge, le contrôleur de l'horloge temps réel de la ruche maitre étant agencé pour, lors de la réception dudit signal de mise à jour, mettre à jour l'heure de ladite horloge à partir dudit signal de mise à jour. Le module de communication sans-fil de la ruche maitre est également agencé pour, lors de la réception dudit signal de mise à jour, transmettre ce signal de mise à jour au module de communication sans-fil de chacune des ruches esclaves, le contrôleur de l'horloge temps réel de chaque ruche esclave étant agencé pour, lors de la réception dudit signal de mise à jour, mettre à jour l'heure de ladite horloge à partir dudit signal de mise à jour. En d'autres termes, l'instant d'émission permettant la mise-à-jour périodique du poids d'une ruche est déterminé à partir de l'horloge temps réel de cette ruche, également nommée RTC (de l'anglais « Real Time Clock »). Or, chacune de ces horloges temps réel présente une dérive qui lui est propre, et qui peut provoquer une désynchronisation des transmissions des poids mis-à-jour des ruches esclaves à la ruche maitre. Ces différentes caractéristiques permettent ainsi de resynchroniser les horloges temps réel des ruches esclaves sur l'horloge temps réel de la ruche maitre. De préférence, ladite période de mise-à-jour des horloges temps réel peut être d'une journée.

Dans un mode de réalisation, le module de communication sans-fil, notamment le deuxième sous-module de communication sans-fil, de la ruche maitre est apte à émettre des signaux selon plusieurs canaux de communication sans-fil et est agencé pour déterminer un niveau de puissance en réception d'un signal sur chacun des canaux et pour transmettre l'ensemble des données acquises par les capteurs de poids des ruches maitre et esclaves à destination dudit terminal distant sur le canal de communication présentant le niveau de puissance en réception le plus important.

Par exemple, le module de communication sans-fil, notamment le deuxième sous-module de communication sans-fil, de la ruche maitre peut être apte à émettre des signaux selon un premier canal de type NB IOT (de l'anglais « Narrow Band loT »), selon un deuxième canal de type LTE-M (de l'anglais « Long Term Evolution - Machine ») et selon un troisième canal de type GSM (de l'anglais « Global System for Mobile communications »). On notera que le troisième canal de type GSM pourra être sélectionné uniquement lorsqu'aucun des premier et deuxième canaux ne permettent une transmission des signaux, dans la mesure où la consommation électrique du module de communication sans-fil pour ce type de canal est plus importante que pour les autres types.

Dans un mode de réalisation de l'invention chacune des ruches maitre et esclaves comporte un capteur de mouvement de ladite ruche, un module de géolocalisation de ladite ruche, le module de communication sans-fil de chacune des ruches maitre et esclaves étant agencé pour transmettre des coordonnées géographiques de ladite ruche, acquises par le module de géolocalisation de ladite ruche, audit terminal distant lors de la détection d'un mouvement de ladite ruche par le capteur de mouvement. Le capteur de mouvement permet ainsi de détecter un déplacement de la ruche, notamment en cas de vol de cette ruche, tandis que le module de géolocalisation permet ensuite de suivre les déplacements de cette ruche.

Par exemple, lors de la détection d'un mouvement d'une ruche par son capteur de mouvement, le module de communication sans-fil de ladite ruche peut être agencé pour transmettre une requête de confirmation de déplacement au terminal distant. Le cas échéant, le terminal distant peut être apte à transmettre, en fonction d'une saisie réalisée par un usager, notamment un apiculteur, sur le terminal distant, une notification de confirmation ou d'infirmation de ce déplacement audit module de communication sans-fil. Dans le cas d'une réception d'une notification d'infirmation de ce déplacement par le module de communication sans-fil de ladite ruche, ce module de communication sans-fil peut alors être agencé pour transmettre des coordonnées géographiques de ladite ruche, acquises par le module de géolocalisation de ladite ruche, audit terminal distant. Selon ces caractéristiques, l'apiculteur peut confirmer la légitimité du déplacement d'une ruche, détecté par le capteur de mouvement, ou au contraire, constater un vol et déclencher le suivi des déplacements. On notera qu'il est possible à l'apiculteur, d'interrompre temporairement, au niveau du terminal distant, ces échanges de notification et ce suivi, afin de réaliser des déplacements de la ruche sans entraîner de consommation électrique supplémentaire.

De préférence, le terminal distant peut être équipé d'une interface de cartographie et peut être agencé pour y afficher un logo associé à ladite ruche positionné à l'emplacement desdites coordonnées géographiques reçues du module de communication sans-fil de ladite ruche.

Avantageusement, le module de géolocalisation de chacune des ruches maitre et esclaves est apte à emprunter une configuration d'acquisition et une configuration inactive, chacune des ruches maitre et esclaves comportant une unité de contrôle agencée pour contrôler le module de géolocalisation de ladite ruche pour qu'il emprunte ladite configuration d'acquisition lors de la détection d'un mouvement de cette ruche par son capteur de mouvement.

Dans un mode de réalisation de l'invention, lors de l'installation d'une nouvelle ruche esclave au rucher, le module de communication sans-fil de ladite nouvelle ruche esclave est agencé pour transmettre des données relatives au poids initial de ladite nouvelle ruche au module de communication sans-fil de la ruche maitre, et le module de communication sans-fil de la ruche maitre est agencé pour transmettre lesdites données relatives au poids initial de la nouvelle ruche au terminal distant. Il est ainsi possible de connaitre le poids initial d'une ruche esclave, afin de pouvoir superviser, par la suite, le poids du miel contenu dans cette ruche esclave, ou encore les mouvements des abeilles de cette ruche esclave.

Avantageusement, lors de l'installation d'une nouvelle ruche esclave au rucher, les modules de communication sans-fil de cette nouvelle ruche esclave et de la ruche maitre peuvent être agencés pour échanger une clé d'accès au réseau et des identifiants de la nouvelle ruche esclave, afin de pouvoir associer ladite nouvelle ruche esclave au rucher et que les données par le capteur de poids de cette nouvelle ruche esclave, transmises par le module de communication sans-fil de cette nouvelle ruche esclave puissent être reçues par le module de communication sans-fil de la ruche maitre et transmises ensuite au terminal distant. Le cas échéant, en cas de succès de cette association, l'horloge temps réel de la nouvelle ruche esclave pourra être synchronisée avec l'horloge temps réel de la ruche maitre.

L'invention a également pour objet un système de gestion d'un rucher connecté comportant un rucher connecté selon l'invention, et un serveur informatique de données formant ledit terminal distant recevant l'ensemble des données acquises par les capteurs de poids des ruches maitre et esclaves et transmis par le module de communication sans-fil de la ruche maitre, ledit serveur informatique étant muni d'une interface de visualisation du poids de miel contenu dans chacune des ruches dudit rucher connecté, ledit poids de miel étant déterminé à partir desdites données acquises par les capteurs de poids des ruches maitre et esclaves. Par exemple, ledit poids de miel contenu dans une ruche pourra être déterminé par des moyens de traitement de données du serveur informatique de données à partir du poids initial de ladite ruche et du poids de ladite ruche acquis par le capteur de poids de ladite ruche audit instant d'émission.

Avantageusement, ladite interface pourra être une interface de visualisation d'autres données, transmises directement par d'autres capteurs desdites ruches maitre et esclaves, comme une température et/ou ou un taux humidité et/ou des données de géolocalisation. De façon alternative ou cumulative, ledit serveur informatique de données pourra comporter des moyens de traitement de données agencés pour déterminer un ou plusieurs indicateurs à partir des données acquises par les capteurs des ruches maitre et esclaves, comme un nombre d'abeilles présentes dans une ruche ou un flux d'abeilles entrant et/ou sortant de ladite ruche pendant une période donnée, ladite interface étant une interface de visualisation dudit ou desdits indicateurs.

Dans un mode de réalisation de l'invention, le serveur informatique de données comporte des moyens de traitement de données agencés pour détecter un événement relatif à l'une des ruches dudit rucher connecté en fonction desdites données transmises par le module de communication sans-fil de la ruche maitre dudit rucher connecté, le serveur informatique étant agencé pour afficher une alerte relative audit évènement détecté sur ladite interface de visualisation.

Par exemple, lesdits moyens de traitement de données pourront être agencés pour émettre une alerte indiquant un seuil de poids de miel minimum ou maximum atteint dans une ruche dudit rucher connecté et/ou une alerte indiquant un besoin de nourriture des abeilles dudit rucher connecté et/ou une alerte indiquant une perte d'un élément structurel dans une ruche dudit rucher connecté et/ou un problème d'ensoleillement local au niveau d'une ruche dudit rucher connecté et/ou un problème d'accroissement ou de diminution de la population d'une ruche dudit rucher connecté.

Avantageusement, lesdites moyens de traitement de données pourront être agencés pour mettre en œuvre un ou plusieurs algorithmes d'apprentissage automatique aptes à prédire une valeur d'un desdits indicateurs et/ou aptes à prédire l'occurrence d'un desdits événements à partir desdites données transmises par les modules de communication sans-fil des ruches dudit rucher connecté.

L'invention a également pour objet une balance de ruche d'un rucher connecté selon l'invention, ladite balance de ruche comportant au moins un capteur de poids et un module de communication sans-fil agencé pour transmettre un signal transportant des données acquises par le capteur de poids au moyen d'une porteuse de fréquence inférieure à 1 GHz.

L'invention a également pour objet un procédé de supervision d'un rucher connecté selon l'invention au niveau d'un terminal distant, le procédé comportant les étapes suivantes :
a. Acquisition de données relatives au poids de chaque ruche maitre et esclaves par le capteur de poids de cette ruche ;
b. Transmission, notamment synchrone, desdites données relatives au poids de chaque ruche esclave, par le module de communication sans-fil de ladite ruche esclave, au module de communication sans-fil de la ruche maitre ;
c. Transmission de l'ensemble desdites données reçues par la ruche maitre et relatives au poids des ruches esclaves et des données relatives au poids de la ruche maitre acquises par le capteur de poids de la ruche maitre au terminal distant.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, un rucher connecté selon un mode de réalisation de l'invention ;
[Fig. 2] représente, schématiquement et partiellement, une ruche du rucher connecté de la [Fig. 1] ; et
[Fig. 3] représente, schématiquement et partiellement, une balance support de la ruche de la [Fig. 2].

Dans la description qui suit, les éléments identiques, par structure ou par fonction, apparaissant sur différentes figures conservent, sauf précision contraire, les mêmes références.

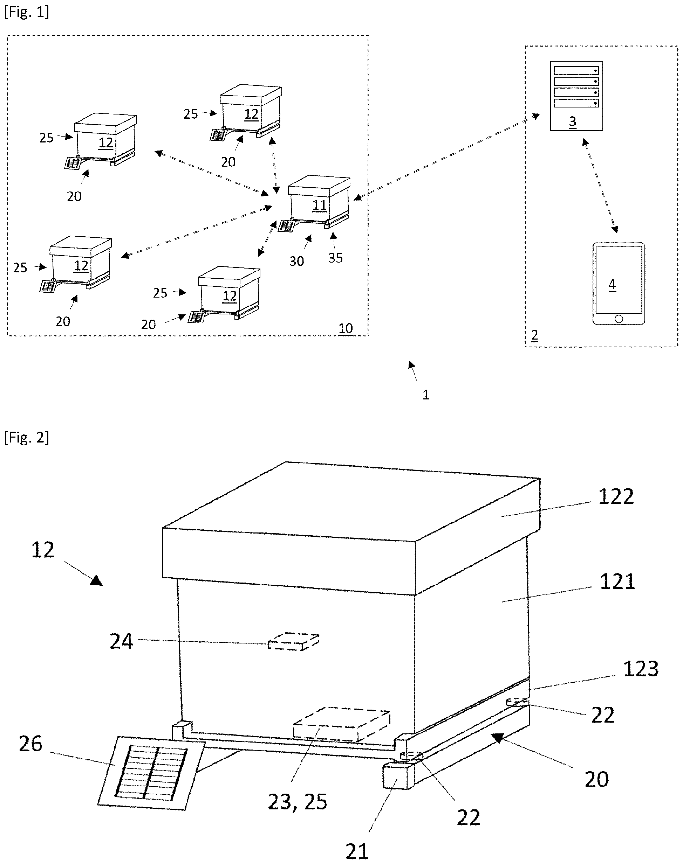

On a représenté en [Fig. 1] un système de gestion 1 d'un rucher connecté 10 selon un mode de réalisation de l'invention.

Le rucher connecté 10 comporte une ruche maitre 11 et une pluralité de ruches esclaves 12. Les ruches esclaves 12 sont sensiblement identiques entre elles, de sorte que seule l'une de ces ruches esclaves 12 va maintenant être décrite.

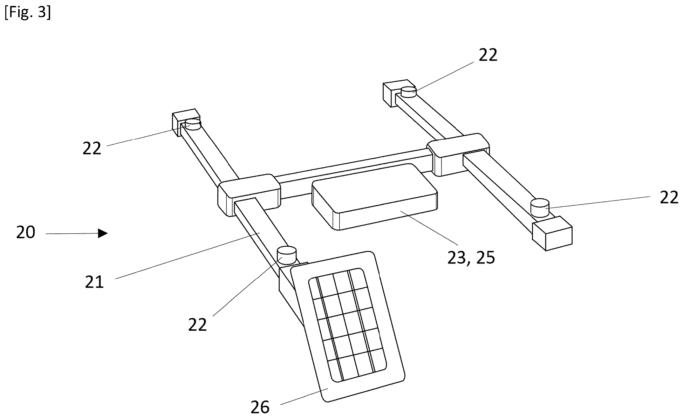

Les [Fig. 2] et [Fig. 3] représentent respectivement une vue en perspective d'une ruche esclave 12 équipée d'une balance 20 selon l'invention et une vue en perspective de la balance 20 seule.

La ruche 12 comporte un corps de ruche 121 et un toit 122 ainsi qu'un plancher ou fond de ruche 123. Le plancher 123 est un élément plan, de forme généralement rectangulaire, positionné en partie basse et supportant le corps 11. On pourrait envisager d'empiler une ou plusieurs hausses sur le corps 121, sans sortir du cadre de la présente invention.

L'ensemble plancher 123, corps de ruche 121 et toit 122 est monté sur une balance 20.

Cette balance 20 comporte une platine 21 en forme de H, sur laquelle le plancher 123 est positionné et fixé. Un capteur de force ou de compression 22 est agencé à chaque extrémité de cette platine 21, de sorte qu'un coin du plancher 123 repose sur ce capteur de poids 22.

On pourra envisager d'autres formes de cette platine 21, et notamment des formes permettant de surélever le plancher 123 vis-à-vis du sol, sans sortir du cadre de la présente invention. De même, on pourra prévoir d'employer un nombre de capteurs de poids différent du mode de réalisation des [Fig. 2] et [Fig. 3].

La balance 20 comporte par ailleurs un calculateur (non représenté), embarqué dans un boîtier 23 supporté par la platine 21, et agencé pour déterminer le poids de la ruche 12 à partir des mesures réalisées par les capteurs 22.

La balance 20 comporte par ailleurs un ensemble de capteurs, dont un capteur de température et un capteur d'humidité (non représentés), logés dans un autre boîtier 24, destiné à être agencé au sein de la ruche.

La balance 20 comporte également une batterie disposée dans le boîtier 23, alimentée par un panneau photovoltaïque 26, et agencée pour alimenter les différents équipements électroniques de cette balance 20.

La balance 20 comporte un module de communication sans-fil 25, également disposé dans le boîtier 23, recevant les données relatives au poids déterminé par le calculateur de la balance 20.

Ce module de communication sans-fil 25 est apte à moduler une porteuse de fréquence inférieure à 1 GHz, par exemple de 868 MHz ou de 900 MHz, avec un signal modulant déterminé à partir de ces différentes données, et à émettre ce signal modulé, via une antenne du module de communication sans-fil, à destination de la ruche maitre 11. Le signal modulé forme ainsi un message, codé selon un protocole donné, et contenant lesdites données ainsi qu'un identifiant de la ruche esclave 12.

Il est à noter que le boîtier 24 embarque également un module de communication sans-fil pour recevoir les différentes données acquises par les capteurs agencés dans ce boîtier 24. Ce module de communication sans-fil étant semblable au module 25, et transmettant notamment lesdites données selon un même protocole et avec un même identifiant de la ruche esclave 12, il est ainsi assimilé, dans la suite de la description, à ce module 25.

La ruche maitre 11 présente une structure identique à celles des ruches esclaves 12 et comporte ainsi une balance 30 identique aux balances 20 de ces ruches esclaves 12, à l'exception de son module de communication sans-fil 35.

Ce module de communication sans-fil 35 est en effet agencé pour recevoir les données transmises par les modules de communication sans-fil 25 des ruches esclaves 12 et pour transmettre ces données à un terminal distant 2 du système de gestion 1. En d'autres termes, l'ensemble des données acquises par les capteurs des ruches esclaves 12 est transmis, via la ruche maitre 11, au terminal distant 2.

Dans le mode de réalisation décrit, le module de communication sans-fil 25 de chaque ruche esclave 12 transmet de façon périodique, par exemple toutes les 30 minutes, au module de communication sans-fil 35 de la ruche maitre 11 un paquet de données acquis par les différents capteurs de cette ruche esclave au cours de chaque période. En outre, toutes les ruches esclaves 12 transmettent leurs paquets de données à un même instant d'émission. Une fois tous les paquets de données reçus au niveau de la ruche maitre 11, le module de communication sans-fil 35 de la ruche maitre 11 transmets tous ces paquets de données, ainsi qu'un paquet de données acquis par ses propres capteurs au terminal distant 2 pendant la même période. On notera que le module de communication sans-fil 25 de la ruche maitre 11 peut comporter un tampon permettant de tolérer une légère désynchronisation dans la réception des différents paquets de données.

Afin de pouvoir réaliser une transmission synchrone des paquets de données par toutes les ruches esclaves 12 vers la ruche maitre 11, chacune des ruches maitre 11 et esclaves 12 comporte une horloge temps réel muni d'un contrôleur. L'instant d'émission du paquet de données par chaque ruche esclave 12 est ainsi déterminé à partir de l'horloge temps réel de cette ruche esclave, le passage d'une période à la période suivante entrainant ainsi une transmission du paquet de données vers la ruche maitre 11, et donc une mise-à-jour des différentes données relatives à cette ruche esclave 12 au niveau du terminal distant 2.

Afin de compenser la dérive naturelle de ces horloges temps réel et donc d'éviter une désynchronisation à long terme des transmissions des paquets de données, le système de gestion 1 comporte un procédé de synchronisation des horloges temps réel des ruches maitre 11 et esclaves 12.

Dans un exemple de réalisation de l'invention, le module de communication sans-fil 35 de la ruche maitre 11 reçoit de façon périodique, par exemple une fois par jour, un signal de mise à jour de son horloge. Ce signal peut être transmis par le terminal distant 2 au module de communication sans-fil 35. De façon alternative ou cumulative, le signal de mise à jour peut être un signal de synchronisation d'un système de positionnement par satellite, notamment un signal de synchronisation GPS (de l'anglais « Global Positioning System »). A la réception de ce signal, le contrôleur de l'horloge temps réel de la ruche maitre 11 met à jour l'heure de ladite horloge à partir dudit signal de mise à jour, tandis que le module de communication sans-fil 35 transmet ce signal de mise à jour au module de communication sans-fil 25 de chacune des ruches esclaves 12. De façon identique à la ruche maitre 11, le contrôleur de l'horloge temps réel de chaque ruche esclave 12 met alors à jour l'heure de ladite horloge à partir dudit signal de mise à jour.

On notera que l'ensemble des capteurs de chaque ruche 11 et 12, le module de communication sans-fil de cette ruche peuvent emprunter une configuration active, dans laquelle les capteurs peuvent réaliser des mesures et le module de communication sans-fil peut émettre et recevoir des signaux, et une configuration inactive, dans laquelle les principales fonctionnalités de ces composants sont inaccessibles. Chaque ruche 11 et 12 comporte ainsi une unité de contrôle (non représenté), agencée dans le boîtier 23 et apte à contrôler ces capteurs et ce module de communication sans-fil pour qu'ils empruntent conjointement l'une ou l'autre de ces configurations active et inactive. Plus précisément, l'unité de contrôle de chaque ruche 11 et 12 est agencée pour contrôler l'ensemble des capteurs et le module de communication sans-fil de cette ruche pour qu'ils empruntent ladite configuration active entre deux périodes consécutives, c'est-à-dire sensiblement audit instant d'émission, et pour qu'ils empruntent ladite configuration inactive pendant la majeure partie d'une période, entre deux instants d'émission consécutifs. En d'autres termes, l'unité de contrôle vient ainsi réveiller les capteurs et le module de communication sans-fil uniquement lorsqu'il est nécessaire de mettre à jour les données au niveau du terminal distant 2, de sorte à optimiser la consommation électrique de la balance 20 et 30. Bien évidemment, on pourra prévoir une légère désynchronisation dans le réveil des capteurs vis-à-vis de celui du module de communication sans-fil, de sorte que les données soient acquises avant d'être transmises.

Le module de communication sans-fil 35 de la ruche maitre 12 est agencé pour transmettre et recevoir des signaux vers, respectivement depuis, le terminal distant 2 au moyen d'une porteuse de fréquence inférieure à 1 GHz. Plus précisément, ce module de communication sans-fil 35 est apte à émettre et recevoir des signaux selon plusieurs canaux et donc plusieurs protocoles de communication sans-fil. Dans l'exemple de la [Fig. 1], le module de communication sans-fil 35 peut ainsi émettre des signaux selon un premier canal de type NB IOT (de l'anglais « Narrow Band loT »), selon un deuxième canal de type LTE-M (de l'anglais « Long Term Evolution - Machine ») et selon un troisième canal de type GSM (de l'anglais « Global System for Mobile communications »). Il est à relever que chacun de ces protocoles présentent des bandes de fréquence inférieures à 1 GHz.

Le module de communication sans-fil 35 est ainsi agencé pour déterminer un niveau de puissance en réception d'un signal sur chacun des canaux, par exemple via des signaux de référence reçus depuis des antennes relais de ces différents canaux. Le module de communication sans-fil 35 sélectionne alors le canal de communication présentant le niveau de puissance en réception le plus important afin de transmettre l'ensemble des paquets de données reçus des ruches esclaves 12 et ses propres données au terminal distant 2.

Dans l'exemple de la [Fig. 1], le terminal distant 2 comporte un serveur de données 3, équipé d'un module de communication sans-fil apte à recevoir des données émises par le module de communication sans-fil 35 de la ruche maitre 11, d'une mémoire informatique, de moyens de lecture et d'écriture dans cette mémoire, de moyens de traitement de données, et d'une interface. On notera que ces moyens de traitement de données et cette interface comportent, dans cet exemple, un ou plusieurs programmes informatiques permettant un accès distant aux données stockées dans ladite mémoire et permettant de visualiser ces données ou des indicateurs dérivés de ces données, notamment depuis une application logicielle installée sur un téléphone intelligent 4 ou depuis un logiciel de navigation web.

Cette interface permet ainsi un apiculteur de superviser la production de miel et la santé du rucher 10 et de gérer ce rucher 10 et ses différentes ruches.

Par exemple, l'interface peut permettre de visualiser le poids de miel contenu dans chacune des ruches 11 et 12 du rucher connecté 10. Le poids initial, à vide, de chacune des ruches maitre et esclaves étant connu, notamment grâce à un procédé qui sera décrit ultérieurement, les moyens de traitement du serveur de données 3 peuvent déterminer le poids de miel contenu dans chacune de ces ruches à partir des données acquises par les capteurs de poids 22 de cette ruche.

L'interface pourra également permettre de visualiser des données dites brutes, directement acquises par les capteurs desdites ruches maitre et esclaves 11 et 12, comme la température et/ou le taux humidité de ces ruches.

L'interface pourra également permettre de visualiser des données dites dérivées, calculées par les moyens de traitement du serveur de données 3 à partir des données acquises par les capteurs des ruches maitre et esclaves 11 et 12. Il pourra par exemple s'agir du nombre d'abeilles présentes dans une ruche, d'un flux d'abeilles entrant et/ou sortant d'une ruche pendant une période donnée.

L'interface pourra également permettre l'affichage de notifications relatives à des événements détectés par les moyens de traitement du serveur de données 3 à partir des données acquises par les capteurs des ruches maitre et esclaves 11 et 12. Par exemple, lesdits moyens de traitement de données pourront être agencés pour émettre une alerte indiquant un seuil de poids de miel minimum ou maximum atteint dans une ruche 11 ou 12 et/ou une alerte indiquant un besoin de nourriture des abeilles dudit rucher connecté 10 et/ou une alerte indiquant une perte d'un élément structurel d'une ruche 11 ou 12 et/ou un problème d'ensoleillement local d'une ruche 11 ou 12 et/ou un problème d'accroissement ou de diminution de la population d'une ruche 11 ou 12 et/ou la présence d'un prédateur d'abeille au voisinage du rucher 10.

Lesdits moyens de traitement de données du serveur de données 3 pourront être agencés pour mettre en œuvre un ou plusieurs algorithmes d'apprentissage automatique aptes à prédire une valeur desdites données dérivées et/ou aptes à prédire l'occurrence d'un desdits événements à partir de tout ou partie des données acquises par les capteurs des ruches maitre et esclaves et/ou desdites données dérivées.

Par exemple, lesdits moyens de traitement de données pourront mettre en œuvre un algorithme de type régresseur, entrainé par un algorithme d'apprentissage automatique, à prédire le poids de miel contenu dans une ruche et le nombre d'abeilles présentes dans une ruche, à partir du poids de la ruche.

Dans la phase d'entrainement, un jeu de données dit d'apprentissage contenant une pluralité de triplets « poids de la ruche, poids du miel contenu dans la ruche et nombre d'abeilles présentes dans la ruche » pourra ainsi être fourni au régresseur. Pour chaque triplet de données, le régresseur pourra alors prédire un poids de miel et un nombre d'abeille à partir du poids de la ruche et comparer l'erreur entre les valeurs prédites et les valeurs du triplet afin d'ajuster ses hyperparamètres pour minimiser cette erreur et améliorer ses performances de prédiction pour les triplets suivants. A titre non limitatif, le régresseur pourra comporter un régresseur linéaire simple, multiple ou logistique ou encore un réseau de neurones.

Le poids initial, à vide, d'une ruche esclave 12 pourra par exemple être obtenu lors de l'ajout de cette ruche 12 au rucher connecté 10.

Par exemple, lors de l'installation de la nouvelle ruche esclave 12, l'apiculteur pourra demander, localement ou à distance via l'interface du serveur de données 3, l'ajout de cette ruche 12 au rucher connecté 10. Le module de communication sans-fil 35 de la ruche maitre 11 enverra alors, par Bluetooth, un clé d'accès au réseau ainsi qu'une fréquence d'émission à la nouvelle ruche 12, laquelle renverra, via son module de communication 25, des identifiants.

En cas de succès d'association, l'horloge temps réel de la nouvelle ruche esclave 12 est alors synchronisée avec l'horloge temps réel de la ruche maitre 11. Le poids de la nouvelle ruche 12 est mesuré par ses capteurs de poids 22, lequel est nécessairement un poids initial, à vide. Le module de communication sans-fil 25 de ladite nouvelle ruche esclave 12 transmet alors ce poids au module de communication sans-fil 35 de la ruche maitre 12, qui le relaie au terminal distant 2.

On notera que le serveur de données pourrait permettre la gestion et la supervision simultanée de plusieurs ruchers connectés.

Le système de gestion 1 permet également de détecter un vol d'une ruche 11 ou 12 et de suivre les déplacements de cette ruche volée. A cet effet, chacune des ruches 11 et 12 comporte un capteur de déplacement et un module de géolocalisation (non représentés), logés dans ce boîtier 23 de cette ruche.

Lors de la détection d'un mouvement d'une ruche 11 ou 12 par son capteur de mouvement, le module de communication sans-fil 25 ou 35 de ladite ruche transmet une requête de confirmation de déplacement au serveur de données 3. L'apiculteur peut alors confirmer ou infirmer ce déplacement via l'interface du serveur de données 3, une notification correspondant à sa saisie étant transmise par le serveur de données 3 au module de communication sans-fil de ladite ruche 11 ou 12.

Dans le cas d'une réception d'une notification d'infirmation du déplacement, le module de communication sans-fil 25 ou 35 de cette ruche transmet alors périodiquement des coordonnées géographiques de ladite ruche, acquises par le module de géolocalisation de ladite ruche, au serveur de données 3.

L'interface du serveur de données 3 peut alors afficher un outil de cartographie sur lequel est matérialisé l'emplacement desdites coordonnées géographiques reçues du module de communication sans-fil de ladite ruche 11 ou 12.

De façon similaire aux capteurs et au module de communication sans-fil, le module de géolocalisation de chacune des ruches maitre et esclaves 11 et 12 est apte à emprunter une configuration d'acquisition et une configuration inactive, l'unité de contrôle de cette ruche étant ainsi agencée pour contrôler le module de géolocalisation de ladite ruche pour qu'il emprunte ladite configuration d'acquisition lors de la détection d'un mouvement de cette ruche par son capteur de mouvement, et pour qu'il emprunte ladite configuration inactive en l'absence de détection de mouvement.

La description qui précède explique clairement comment l'invention permet d'atteindre les objectifs qu'elle s'est fixée, à savoir proposer ainsi une architecture de rucher connecté en étoile, centralisée autour d'une seule et même ruche maitre, chargée de récolter les données acquises par les capteurs des autres ruches esclaves et de transmettre ces données vers un terminal distant, à partir duquel l'apiculteur pourra superviser sa production de miel et gérer son rucher avec un coût acceptable, et sans que les technologies employées soient nocives pour les abeilles.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Rucher connecté (10) comprenant une ruche dite maitre (11) et une pluralité de ruches dites esclaves (12), chacune des ruches maitre et esclaves comportant un capteur de poids (22) apte à acquérir des données relatives au poids de la ruche et un module de communication sans-fil (25, 35), la ruche maitre étant agencée pour récolter, aux moyens des modules de communication sans-fil, des données acquises par les capteurs de poids des ruches esclaves, et pour transmettre l'ensemble des données acquises par les capteurs de poids des ruches maitre et esclaves à un terminal distant (2), le module de communication sans-fil de chaque ruche esclave étant agencé pour transmettre au module de communication de la ruche maitre lesdites données acquises par le capteur de poids de cette ruche esclave au moyen d'une porteuse de fréquence inférieure à 1 GHz.

2. Rucher connecté (10) selon la revendication précédente, dans lequel chacune des ruches maitre et esclaves (11, 12) comporte un capteur de température et un capteur d'humidité, la ruche maitre étant agencée pour récolter, aux moyens des modules de communication sans-fil (25, 35), des données acquises par les capteurs de poids (22), de température et d'humidité des ruches esclaves, et pour transmettre l'ensemble des données acquises par les capteurs de poids, de température et d'humidité des ruches maitre et esclaves au terminal distant (2).

3. Rucher connecté (10) selon l'une des revendications précédentes, dans lequel chacune des ruches maitre et esclaves (11, 12) comporte un panneau photovoltaïque (26) et une unité de stockage d'énergie électrique ; le panneau photovoltaïque de chaque ruche étant agencé pour charger ladite unité de stockage de ladite ruche; et ladite unité de stockage de ladite ruche étant agencée pour alimenter électriquement le capteur de poids (22) et le module de communication sans-fil (25, 35) de ladite ruche.

4. Rucher connecté (10) selon l'une des revendications précédentes, dans lequel le module de communication sans-fil (25) de chaque ruche esclave (12) est agencé pour transmettre, de façon périodique, au module de communication sans-fil (35) de la ruche maitre (11) lesdites données acquises par le capteur de poids (22) de cette ruche esclave, lesdites données étant transmises par tous les modules de communication sans-fil à un même instant d'émission.

5. Rucher connecté (10) selon la revendication précédente, dans lequel le capteur de poids (22) de chacune des ruches maitre et esclaves (11, 12) est apte à emprunter une configuration d'acquisition et une configuration inactive, chacune des ruches maitre et esclaves comportant une unité de contrôle agencée pour contrôler le capteur de poids de ladite ruche pour qu'il emprunte ladite configuration d'acquisition audit instant d'émission et pour qu'il emprunte ladite configuration inactive entre deux instants d'émission consécutifs.

6. Rucher connecté (10) selon l'une des revendications 4 ou 5, dans lequel chacune des ruches maitre et esclaves (11, 12) comporte une horloge temps réel muni d'un contrôleur et dans lequel le module de communication sans-fil (35) de la ruche maitre est apte à recevoir de façon périodique un signal de mise à jour de l'horloge, le contrôleur de l'horloge temps réel de la ruche maitre étant agencé pour, lors de la réception dudit signal de mise à jour, mettre à jour l'heure de ladite horloge à partir dudit signal de mise à jour et le module de communication sans-fil de la ruche maitre est agencé pour, lors de la réception dudit signal de mise à jour, transmettre ce signal de mise à jour au module de communication sans-fil (25) de chacune des ruches esclaves, le contrôleur de l'horloge temps réel de chaque ruche esclave étant agencé pour, lors de la réception dudit signal de mise à jour, mettre à jour l'heure de ladite horloge à partir dudit signal de mise à jour.

7. Rucher connecté (10) selon l'une des revendications précédentes, dans lequel le module de communication sans-fil (35) de la ruche maitre (11) est apte à émettre des signaux selon plusieurs canaux de communication sans-fil et est agencé pour déterminer un niveau de puissance en réception d'un signal sur chacun des canaux et pour transmettre l'ensemble des données acquises par les capteurs de poids (22) des ruches maitre et esclaves (11, 12) à destination dudit terminal distant (2) sur le canal de communication présentant le niveau de puissance en réception le plus important.

8. Rucher connecté (10) selon la revendication précédente, dans lequel chacune des ruches maitre et esclaves (11, 12) comporte un capteur de mouvement de ladite ruche, un module de géolocalisation de ladite ruche, le module de communication sans-fil (25, 35) de chacune des ruches maitre et esclaves étant agencé pour transmettre des coordonnées géographiques de ladite ruche, acquises par le module de géolocalisation de ladite ruche, audit terminal distant lors de la détection d'un mouvement de ladite ruche par le capteur de mouvement.

9. Rucher connecté (10) selon l'une des revendications précédentes, dans lequel, lors de l'installation d'une nouvelle ruche esclave (12) au rucher, le module de communication sans-fil (25) de ladite nouvelle ruche esclave est agencé pour transmettre des données relatives au poids initial de ladite nouvelle ruche au module de communication sans-fil (35) de la ruche maitre (11), et le module de communication sans-fil de la ruche maitre est agencé pour transmettre lesdites données relatives au poids initial de la nouvelle ruche au terminal distant (2).

10. Système de gestion (1) d'un rucher connecté comportant un rucher connecté (10) selon l'une des revendications précédentes et un serveur informatique de données (3) formant ledit terminal distant (2) recevant l'ensemble des données acquises par les capteurs de poids (22) des ruches maitre et esclaves (11, 12) et transmis par le module de communication sans-fil (35) de la ruche maitre, ledit serveur informatique étant muni d'une interface de visualisation du poids de miel contenu dans chacune des ruches dudit rucher connecté, ledit poids de miel étant déterminé à partir desdites données acquises par les capteurs de poids des ruches maitre et esclaves.

11. Système de gestion (1) selon la revendication précédente, dans lequel le serveur informatique de données (3) comporte des moyens de traitement de données agencés pour détecter un événement relatif à l'une des ruches dudit rucher connecté (10) en fonction desdites données transmises par le module de communication sans-fil (35) de la ruche maitre (11) dudit rucher connecté, le serveur informatique étant agencé pour afficher une alerte relative audit évènement détecté sur ladite interface de visualisation.
